# EUROPEAN PATENT APPLICATION

(11) **EP 4 772 390 A1**
(43) Date of publication of application: **08.07.2026**
(21) Application number: 24857618.3
(22) Date of filing: 02.02.2024
(51) Int. Cl.: B60L 58/13, B60L 3/00

(54) **METHOD AND SYSTEM FOR EQUALIZING POWER LEVEL OF VEHICLE BATTERY PACK, AND VEHICLE**

(30) Priority: 28.08.2023 CN 202311088276
(71) Applicant: Chongqing Changan Automobile Co., Ltd., Chongqing 400023 (CN)
(72) Inventor: KOU, Congcong, Chongqing 400023 (CN); YOU, Hongyi, Chongqing 400023 (CN); ZHANG, Jintai, Chongqing 400023 (CN)
(74) Representative: Barker Brettell LLP
(86) International application number: PCT/CN2024/075607
(87) International publication number: WO 2025/044061

(57) **Abstract**

A charge equalization method and system for a vehicle battery pack, and a vehicle. The method includes: if a vehicle is in a powered-on state and the vehicle meets an equalization condition for triggering equalization, collecting battery data of the vehicle battery pack; calculating to obtain an equalization duration and a charge amount required for the equalization according to the battery data, and selecting an equalization mode according to a use scenario and a use habit; acquiring the number of low-voltage battery cells; if the number of low-voltage battery cells is less than or equal to a preset number of battery cells, selecting a storage battery with a preset voltage to perform supplemental charging on the low-voltage battery cells until a target charge amount for the equalization is reached; if the number of low-voltage battery cells is greater than the preset number of battery cells, adopting a resistive power-consumption method to reduce a charge amount of a high-charge battery cell to the target charge amount. In the present application, equalization conditions for triggering the battery equalization are increased, the equalization mode is selected intelligently, and the equalization duration is calculated accurately, thereby avoiding equalization errors. The supplemental charging equalization or the discharging equalization is selected according to the situation, thereby improving the performance and the service life of the vehicle battery pack.

## Description

The present application claims priority to Chinese patent application No. 202311088276.5, which was filed with the China National Intellectual Property Administration on August 28, 2023 and titled "CHARGE EQUALIZATION METHOD AND SYSTEM FOR VEHICLE BATTERY PACK, AND VEHICLE". The disclosure of which is hereby incorporated by reference in its entirety.

### TECHNICAL FIELD

The present application relates to the field of vehicle power battery management and equalization, and in particular, to a charge equalization method and system for a vehicle battery pack, a vehicle and a computer-readable storage medium.

### BACKGROUND

Lithium iron phosphate battery (Lithium iron phosphate Battery) is a type of lithium-ion battery that uses lithium iron phosphate (LiFePO4) as its positive electrode material and carbon as its negative electrode material. A rated voltage of a cell is 3.2V, and a charge cut-off voltage is between 3.6V and 3.65V. During a charging process, some of lithium ions in the lithium iron phosphate are released, transfer to the negative electrode through electrolyte, and intercalate into the carbon material of the negative electrode. At the same time, electrons are released from the positive electrode, flow through an external circuit and reach the negative electrode, thereby maintaining the chemical reaction equilibrium. During a discharging process, lithium ions are released from the negative electrode, flow through the electrolyte and reach the positive electrode, at the same time, electrons are released from the negative electrode and pass through the external circuit to the positive electrode, thereby providing energy for outside.

The material of lithium iron phosphate is composed of olivine-structured LiFePO4. Lithium iron phosphate batteries have advantages of long cycle life, low heat generation, good thermal stability, and low cost. The price advantage of the lithium iron phosphate, combined with the maturity and application of the cell-to-pack (CTP, Cell To PACK) technology, has improved the energy density of the lithium iron phosphate battery system. This improvement has further enhanced the demand for lithium iron phosphate batteries in the power battery market, and they are widely used in plug-in hybrid electric vehicles and battery electric vehicles.

Lithium iron phosphate batteries also have some obvious disadvantages: (1) Poor power performance at low temperatures. (2) Since a plateau voltage during the charging and discharging process is very stable and basically does not change, a calculation of SOC (State of Charge, State of Charge, which is used to reflect a remaining capacity of the battery) using an open-circuit voltage and an ampere-hour integration method (which calculates a battery capacity by integrating current and time during the discharging process of the battery) has a relatively large error. There are multiple reasons for battery inconsistency, for example, different self-discharge rates of different battery cells, inconsistent environmental conditions such as usage temperatures, differences due to manufacturing processes when the battery is produced, and the like. In addition, continuous changes in temperature, polarization, and usage cycles lead to a larger deviation of SOC estimation compared to other materials. A voltage difference among different battery cells within a battery pack is common, which leads to inconsistencies among the cells within the battery pack. Lithium iron phosphate batteries used in plug-in hybrid electric vehicles and battery electric vehicles are subject to complex usage environments and conditions. During the usage, battery cells will inevitably have problems of performance and voltage inconsistencies, and inconsistencies among the battery cells within the battery pack will affect an overall performance of the battery pack and reduce service life of the battery pack.

Therefore, an equalization system is required to address the problem of the voltage difference among battery cells within the battery pack. However, due to voltage characteristics of the lithium iron phosphate, opportunities for equalization are limited. This limitation makes it difficult to accurately calculate an equalization duration, resulting in relatively frequent equalization errors. This, in turn, reduces the service life and performance of the lithium iron phosphate battery pack. In severe cases, it may even induce battery pack damage or create safety hazards.

Therefore, there remains a need for further improvement and development in the prior art.

### SUMMARY

The main objective of the present application is to provide a charge equalization method and system for a vehicle battery pack, a vehicle and a computer-readable storage medium. It is intended to solve the following technical problem in the related art, the voltage characteristics of the vehicle battery pack (lithium iron phosphate) limits the opportunities for equalization. This limitation makes it difficult to accurately calculate the equalization duration, resulting in relatively frequent equalization errors and long passive equalization duration. These issues reduce the service life and performance of the vehicle battery pack (lithium iron phosphate battery pack), and even induce battery pack damage or create safety hazards.

According to a first aspect, an embodiment of the present application provides a charge equalization method for a vehicle battery pack. The method includes the following steps: if a vehicle is in a powered-on state and the vehicle meets an equalization condition for triggering equalization, collecting battery data of the vehicle battery pack; calculating to obtain an equalization duration and a charge amount required for the equalization according to the battery data, and selecting an equalization mode according to a use scenario and a use habit; acquiring the number of low-voltage battery cells; if the number of low-voltage battery cells is less than or equal to a preset number of battery cells, selecting a storage battery with a preset voltage to perform supplemental charging on the low-voltage battery cells until a target charge amount for the equalization is reached; if the number of low-voltage battery cells is greater than the preset number of battery cells, adopting a resistive power-consumption method to reduce a charge amount of a high-charge battery cell to the target charge amount.

According to the above technical means in the embodiments of the present application, when it is detected that a vehicle meets one of multiple equalization conditions, relevant battery data of the vehicle battery pack is collected, and an equalization duration and a charge amount required for the equalization are obtained through calculation. Then, an equalization mode is intelligently selected according to different use scenarios and use habits of users. This allows the equalization duration to be calculated as accurately as possible, thereby avoiding equalization errors. Finally, according to a comparison between the number of low-voltage cells and a preset number of battery cells, a supplemental charging equalization or a discharging equalization is performed. The supplemental charging equalization is to select a storage battery with a preset voltage to perform supplemental charging on a low-voltage cell until a target charge amount for the equalization is reached, thereby reducing equalization loading, improving an equalization efficiency, and reducing the load of the equalization system with resistive energy consumption. The discharging equalization is to reduce a charge amount of a high-charge battery cell to the target charge amount by using a resistive power-consumption method. This process involves discharging of the high-charge battery cell with a small equalization current.

Alternatively, in an embodiment of the present application, the equalization condition includes: a minimum SOC of a battery cell is greater than a first percentage, a difference between a maximum SOC of a battery cell and the minimum SOC of the battery cell is greater than a second percentage, a maximum voltage difference of battery cells is greater than a preset voltage value, a remaining equalization duration is greater than 0, absence of faults in an entire vehicle, an equalization circuit temperature is less than a first temperature and a battery cell temperature is less than a second temperature, a battery level of the storage battery during supplemental charging equalization is greater than a third percentage SOC. Meeting any one of the equalization conditions indicates that the vehicle meets the equalization condition for triggering the equalization.

According to the above technical means in the embodiments of the present application, multiple equalization conditions are provided, so equalization opportunities are increased through multi-point equalization triggering conditions. The equalization conditions involve the minimum SOC of a battery cell, the difference between a maximum SOC of a battery cell and the minimum SOC of the battery cell, the maximum voltage difference of battery cells, the remaining equalization duration, the absence of faults in the entire vehicle, the equalization circuit temperature and the battery cell temperature, the battery level of the storage battery during supplemental charging equalization. Meeting any one of the equalization conditions indicates that the vehicle meets the equalization condition for triggering the equalization. In this way, conditions for triggering equalization of the battery are increased, thereby increasing equalization opportunities of the vehicle battery pack.

Alternatively, in an embodiment of the present application, the battery data includes a battery voltage, a battery level and a battery current.

According to the above technical means in the embodiments of the present application, after the vehicle is in the powered-on state, and the vehicle meets an equalization condition for triggering equalization, data of the vehicle battery pack, such as the battery voltage, the battery level, the battery current, etc. are collected, thus facilitating a precise calculation of the equalization duration and the charge amount required for the equalization according to these data such as the battery voltage, the battery level, the battery current, or the like.

Alternatively, in an embodiment of the present application, the equalization duration includes a passive resistance equalization duration and a supplemental charging equalization duration with the storage battery. The passive resistance equalization duration = ΔE/(I 2 *R), where ΔE is an equalization charge amount, I is an equalization current, and R is an equalization resistance. The supplemental charging equalization duration with the storage battery = ΔE/(P*η), where ΔE is an equalization charge amount, P is an equalization power of the storage battery, and η is a loss factor.

According to the above technical means in the embodiments of the present application, the equalization duration includes the passive resistance equalization duration and the supplemental charging equalization duration with the storage battery. The passive resistance equalization is to perform equalization through a resistive power-consumption method, and the supplemental charging equalization with the storage battery is to perform equalization through supplemental charging using the storage battery. The passive resistance equalization duration is obtained through calculation according to the equalization charge amount, the equalization current, and the equalization resistance, and the supplemental charging equalization duration with the storage battery is obtained through calculation according to the equalization charge amount, the equalization power of the storage battery, and the loss factor. It enables the use of the calculated equalization duration during subsequent discharging equalization or supplemental charging equalization.

Alternatively, in an embodiment of the present application, the calculating to obtain the charge amount required for the equalization according to the battery data specifically includes: acquiring a cell voltage difference, and determining whether the cell voltage difference is greater than a voltage difference threshold; if the cell voltage difference is greater than the voltage difference threshold, determining whether a static duration of an entire vehicle is greater than a preset time, and determining whether an SOC interval is within a preset SOC interval range; if the static duration of the entire vehicle is greater than the preset time, and the SOC interval is within the preset SOC interval range, selecting an OCV-SOC table lookup method to calculate the charge amount required for the equalization; if the static duration of the entire vehicle is not greater than the preset time, or, the SOC interval is not within the preset SOC interval range, determining whether the vehicle is in a direct current charging state; if the vehicle is in the direct current charging state, calculating the charge amount required for the equalization through a constant current charging dQ/dV-SOC curve of the vehicle battery pack; if the vehicle is not in the direct current charging state, determining whether the vehicle is in an alternating charging state; if the vehicle is in the alternating charging state, performing screening for battery cells at a charging end, and when it is greater than a fourth percentage SOC, calculating the charge amount required for the equalization.

According to the above technical means in the embodiments of the present application, the method for calculating the charge amount required for the equalization can be selected based on determinations related to the cell voltage difference, the static duration of the entire vehicle, the SOC interval, the direct current and alternating current charging states. There are three methods for calculating the charge amount required for the equalization, which are the OCV-SOC table lookup method, the dQ/dV-SOC curve of the vehicle battery pack during constant current charging, and calculation at the charging end. Based on these methods, the charge amount required for the equalization can be calculated accurately, thereby enabling the use of the calculated charge amount required for the equalization during subsequent discharging equalization or supplemental charging equalization.

Alternatively, in an embodiment of the present application, the selecting the equalization mode according to the use scenario and the use habit specifically includes: determining whether the entire vehicle is powered on; if the entire vehicle is not powered on, adopting parking offline equalization; if the entire vehicle is powered on, determining whether a vehicle speed is 0; if the vehicle speed is 0, adopting static equalization; if the vehicle speed is not 0, adopting driving equalization.

According to the above technical means in the embodiments of the present application, the equalization mode can be intelligently selected according to the use scenario and the use habit of users. The equalization mode includes the parking offline equalization, the static equalization and the driving equalization. This enables the selection of the most appropriate equalization mode according to different situations, thereby enhancing the safety of equalization for the vehicle battery pack.

Alternatively, in an embodiment of the present application, the acquiring the number of low-voltage battery cells, if the number of low-voltage battery cells is less than or equal to the preset number of battery cells, selecting the storage battery with the preset voltage to perform supplemental charging on the low-voltage battery cells until the target charge amount for the equalization is reached; if the number of low-voltage battery cells is greater than the preset number of battery cells, adopting the resistive power-consumption method to reduce the charge amount of the high-charge battery cell to the target charge amount, specifically includes: acquiring the number of low-voltage battery cells, determining whether the number of low-voltage battery cells is less than or equal to A multiplied by a total number of battery cells, where A is a constant less than 0.5; if the number of low-voltage cells is less than or equal to A multiplied by the total number of battery cells, selecting the storage battery with the preset voltage to perform supplemental charging on the low-voltage battery cells through a high-low voltage direct current to direct current converter until the target charge amount for the equalization is reached; if the number of low-voltage cells is greater than A multiplied by the total number of battery cells, adopting the resistive power-consumption method to reduce the charge amount of the high-charge battery cell to the target charge amount.

According to the above technical means in the embodiments of the present application, a selection of the supplemental charging equalization or the discharging equalization is made according to a comparison between the number of low-voltage cells and the preset number of battery cells. If whether the number of low-voltage battery cells is less than or equal to A multiplied by the total number of battery cells, the supplemental charging equalization is selected. That is, selecting a storage battery with a preset voltage to perform supplemental charging on a low-voltage cell through a high-low voltage direct current to direct current converter until a target charge amount for the equalization is reached, thereby reducing equalization loading, improving an equalization efficiency, and reducing the load of the equalization system with resistive energy consumption. If the number of low-voltage battery cells is greater than A multiplied by the total number of battery cells, the discharging equalization is selected, that is, a charge amount of a high-charge battery cell is reduced to the target charge amount using a resistive power-consumption method, the high-charge cell consumes power, resulting in a small equalization current.

Alternatively, in an embodiment of the present application, the charge equalization method for the vehicle battery pack further includes: when performing supplemental charging on the low-voltage battery cells using the storage battery with the preset voltage, if a battery level of the storage battery is lower than a fifth percentage SOC, excluding the storage battery from the equalization, and performing supplemental charging on the storage battery using the vehicle battery pack; if the equalization condition is met, controlling the storage battery for supplemental charging equalization, if supplemental charging reaches the target charge amount or a condition for the supplemental charging is not met, stopping the supplemental charging.

According to the above technical means in the embodiments of the present application, it allows the vehicle to perform reverse supplemental charging when the battery level of the storage battery falls below a certain SOC, that is, supplemental charging on the storage battery is achieved using the vehicle battery pack. After the supplemental charging on the storage battery is completed, if the equalization condition is met, the supplemental charging equalization continues. Alternatively, when the supplemental charging cannot be performed or reaches the target charge amount, the supplemental charging is stopped. This prevents the storage battery from being unable to perform equalization operations on the vehicle battery pack due to insufficient charge.

Alternatively, in an embodiment of the present application, after acquiring the number of low-voltage battery cells; if the number of low-voltage battery cells is less than or equal to the preset number of battery cells, selecting the storage battery with the preset voltage to perform supplemental charging on the low-voltage battery cells until the target charge amount for the equalization is reached; if the number of low-voltage battery cells is greater than the preset number of battery cells, adopting the resistive power-consumption method to reduce the charge amount of the high-charge battery cell to the target charge amount, the method further includes: determining whether the equalization duration is greater than 0; if the equalization duration is greater than 0, storing the equalization duration in real time, and performing subtraction processing on the equalization duration; determining whether there is a fault or limiting condition that affects the equalization; if there is no fault or limiting condition that affects the equalization, determining whether a power-down request is detected; if the power-down request is detected, storing a remaining equalization duration and an equalization parameter, and then powering down.

According to the above technical means in the embodiments of the present application, based on the vehicle state, the selected equalization mode and the equalization duration obtained from calculation, an optimal equalization strategy is selected by comparing it with the previously incomplete equalization. The equalization is then executed according to the optimal equalization strategy. It is determined whether the equalization duration is greater than 0, if the equalization duration is greater than 0, the equalization duration is stored in real time, subtraction processing is performed on the equalization duration. The subtraction processing is to perform a determination of the equalization condition after a certain period of equalization, then the equalized duration is subtracted from the aforementioned equalization duration to obtain a remaining equalization duration. Then, it is determined whether there is a fault or limiting condition that affects the equalization. If there is no fault or limiting condition that affects the equalization, it is determined whether a power-down request is detected. If the power-down request is detected, a remaining equalization duration and an equalization parameter are stored, and then the vehicle is powered down. This approach makes the charge equalization operation for the vehicle battery pack more comprehensive and safer.

Alternatively, in an embodiment of the present application, the charge equalization method for the vehicle battery pack further includes: if the vehicle is not in the powered-on state, determining whether a battery management system (Battery Management System, BMS) meets a timed wake-up condition or an offline equalization condition; if the BMS system meets the timed wake-up condition or the offline equalization condition, reading a historical remaining equalization duration and an equalization mode; determining whether the historical remaining equalization duration is greater than an offline equalization duration threshold; if the historical remaining equalization duration is greater than the offline equalization duration threshold, setting an offline equalization duration as the offline equalization duration threshold, and performing offline equalization; setting a BMS wake-up time as a sum of the offline equalization duration threshold and a preset time.

According to the above technical means in the embodiments of the present application, it is further determined whether the BMS system meets a timed wake-up condition or an offline equalization condition when the vehicle is not powered on, that is, when the vehicle is parked for a long time without starting, the entire vehicle will awake the BMS system at certain time intervals. If the BMS system meets the timed wake-up condition or the offline equalization condition, the historical remaining equalization duration and the equalization mode are read. Then, it is determined whether the historical remaining equalization duration is greater than an offline equalization duration threshold, if the historical remaining equalization duration is greater than the offline equalization duration threshold, the offline equalization duration is set as the offline equalization duration threshold, and the offline equalization is performed. In addition, the BMS wake-up time is set as the sum of the offline equalization duration threshold and the preset time. This prevents the vehicle battery pack from failing to undergo the charge equalization operation when the vehicle is not powered on.

Alternatively, in an embodiment of the present application, after the determining whether the historical remaining equalization duration is greater than the offline equalization duration threshold, the method further includes: if the historical remaining equalization duration is not greater than the offline equalization duration threshold, directly setting the BMS wake-up time as the sum of the offline equalization duration threshold and the preset time.

According to the above technical means in the embodiments of the present application, when the historical remaining equalization duration is not greater than the offline equalization duration threshold, the BMS wake-up time can be directly set as the sum of the offline equalization duration threshold and the preset time. It makes the charge equalization operation for the vehicle battery pack more comprehensive and intelligent.

Alternatively, in an embodiment of the present application, the vehicle battery pack includes a lithium iron phosphate battery pack.

According to the above technical means, the embodiments of the present application mainly target the charge equalization method for lithium iron phosphate battery packs, as the lithium iron phosphate battery packs are the most representative type of vehicle battery packs. That is, the multi-point triggered, high-efficiency and intelligent equalization of the present application is mainly for lithium iron phosphate battery packs, but is not limited to the lithium iron phosphate battery packs.

According to a second aspect, an embodiment of the present application provides a charge equalization system for a vehicle battery pack. The charge equalization system for the vehicle battery pack includes: a data collecting module, configured to collect battery data of the vehicle battery pack if a vehicle is in a powered-on state and the vehicle meets an equalization condition for triggering equalization; an equalization calculating module, configured to calculate to obtain an equalization duration and a charge amount required for the equalization according to the battery data, and select an equalization mode according to a use scenario and a use habit; an equalization controlling module, configured to acquire the number of low-voltage battery cells; if the number of low-voltage battery cells is less than or equal to a preset number of battery cells, select a storage battery with a preset voltage to perform supplemental charging on the low-voltage battery cells until a target charge amount for the equalization is reached; if the number of low-voltage battery cells is greater than the preset number of battery cells, adopt a resistive power-consumption method to reduce a charge amount of a high-charge battery cell to the target charge amount.

Alternatively, in an embodiment of the present application, the equalization condition includes: a minimum SOC of a battery cell is greater than a first percentage, a difference between a maximum SOC of a battery cell and the minimum SOC of the battery cell is greater than a second percentage, a maximum voltage difference of battery cells is greater than a preset voltage value, a remaining equalization duration is greater than 0, absence of faults in an entire vehicle, an equalization circuit temperature is less than a first temperature and a battery cell temperature is less than a second temperature, a battery level of a storage battery during supplemental charging equalization is greater than a third percentage SOC. Meeting any one of the equalization conditions indicates that the vehicle meets the equalization condition for triggering the equalization.

Alternatively, in an embodiment of the present application, the battery data includes a battery voltage, a battery level and a battery current.

Alternatively, in an embodiment of the present application, the equalization duration includes a passive resistance equalization duration and a supplemental charging equalization duration with the storage battery. The passive resistance equalization duration = ΔE/(I 2 *R), where ΔE is an equalization charge amount, I is an equalization current, and R is an equalization resistance. The supplemental charging equalization duration with the storage battery = ΔE/(P*η), where ΔE is an equalization charge amount, P is an equalization power of the storage battery, and η is a loss factor.

Alternatively, in an embodiment of the present application, the equalization calculating module includes: a cell voltage difference acquiring and comparing unit, configured to acquire a cell voltage difference, and determine whether the cell voltage difference is greater than a voltage difference threshold; a static duration and SOC interval determining unit, configured to, if the cell voltage difference is greater than the voltage difference threshold, determine whether a static duration of an entire vehicle is greater than a preset time, and determine whether an SOC interval is within a preset SOC interval range; a first unit for calculating the charge amount required for equalization, configured to, if the static duration of the entire vehicle is greater than the preset time, and the SOC interval is within the preset SOC interval range, select an OCV-SOC table lookup method to calculate the charge amount required for the equalization; a direct charging state determining unit, configured to, if the static duration of the entire vehicle is not greater than the preset time, or, the SOC interval is not within the preset SOC interval range, determine whether the vehicle is in a direct current charging state; a second unit for calculating the charge amount required for equalization, configured to, if the vehicle is in the direct current charging state, calculate the charge amount required for the equalization through a constant current charging dQ/dV-SOC curve of the vehicle battery pack; an alternating charging state determining unit, configured to, if the vehicle is not in the direct current charging state, determine whether the vehicle is in an alternating charging state; a third unit for calculating the charge amount required for equalization, configured to, if the vehicle is in the alternating charging state, perform screening for battery cells at a charging end, and when it is greater than a fourth percentage SOC, calculate the charge amount required for the equalization.

Alternatively, in an embodiment of the present application, the equalization calculating module further includes: a first entire vehicle power-on determining unit, configured to determine whether the entire vehicle is powered on; a first equalization mode selecting unit, configured to, if the entire vehicle is not powered on, adopt parking offline equalization; a vehicle speed determining unit, configured to, if the entire vehicle is powered on, determine whether a vehicle speed is 0; a second equalization mode selecting unit, configured to, if the vehicle speed is 0, adopt static equalization; a third equalization mode selecting unit, configured to, if the vehicle speed is not 0, adopt driving equalization.

Alternatively, in an embodiment of the present application, the equalization controlling module includes: a low-voltage battery cell number acquiring and comparing unit, configured to acquire the number of low-voltage battery cells, determine whether the number of low-voltage battery cells is less than or equal to A multiplied by a total number of battery cells, where A is a constant less than 0.5; a supplemental charging equalization unit, configured to, if the number of low-voltage cells is less than or equal to A multiplied by the total number of battery cells, select the storage battery with the preset voltage to perform supplemental charging on the low-voltage battery cells through a high-low voltage direct current to direct current converter until the target charge amount for the equalization is reached; a discharging equalization unit, configured to, if the number of low-voltage cells is greater than A multiplied by the total number of battery cells, adopt the resistive power-consumption method to reduce the charge amount of the high-charge battery cell to the target charge amount.

Alternatively, in an embodiment of the present application, the charge equalization system for the vehicle battery pack further includes: a reverse supplemental charging unit, configured to, when performing supplemental charging on the low-voltage battery cells using the storage battery with the preset voltage, if a battery level of the storage battery is lower than a fifth percentage SOC, exclude the storage battery from the equalization, and perform supplemental charging on the storage battery using the vehicle battery pack; if the equalization condition is met, control the storage battery for supplemental charging equalization, if supplemental charging reaches the target charge amount or a condition for the supplemental charging is not met, stop the supplemental charging; an equalization duration determining unit, configured to determine whether the equalization duration is greater than 0; an equalization duration processing unit, configured to, if the equalization duration is greater than 0, store the equalization duration in real time, and perform subtraction processing on the equalization duration; a fault or limiting condition determining unit, configured to determine whether there is a fault or limiting condition that affects the equalization; a power-down request determining unit, configured to, if there is no fault or limiting condition that affects the equalization, determine whether a power-down request is detected; a storing and powering down unit, configured to, if the power-down request is detected, store a remaining equalization duration and an equalization parameter, and then power down; a BMS system determining unit, configured to, if the vehicle is not in the powered-on state, determine whether a BMS system meets a timed wake-up condition or an offline equalization condition; an equalization duration and mode reading unit, configured to, if the BMS system meets the timed wake-up condition or the offline equalization condition, read a historical remaining equalization duration and an equalization mode; a historical remaining equalization duration determining unit, configured to determine whether the historical remaining equalization duration is greater than an offline equalization duration threshold; an offline equalizing unit, configured to, if the historical remaining equalization duration is greater than the offline equalization duration threshold, set an offline equalization duration as the offline equalization duration threshold, and perform offline equalization; a first wake-up time setting unit, configured to set a BMS wake-up time as a sum of the offline equalization duration threshold and a preset time; a second wake-up time setting unit, configured to, if the historical remaining equalization duration is not greater than the offline equalization duration threshold, directly set the BMS wake-up time as the sum of the offline equalization duration threshold and the preset time.

Alternatively, in an embodiment of the present application, the vehicle battery pack includes a lithium iron phosphate battery pack.

According to a third aspect, an embodiment of the present application provides a vehicle. The vehicle includes: a memory, a processor and a program for charge equalization of a vehicle battery pack which is stored in the memory and executable on the processor, when the program for charge equalization of the vehicle battery pack is executed by the processor, steps of the charge equalization method for the vehicle battery pack according to the aforementioned embodiments are implemented.

According to a fourth aspect, an embodiment of the present application provides a computer-readable storage medium. The computer-readable storage medium stores a program for charge equalization of a vehicle battery pack, when the program for charge equalization of the vehicle battery pack is executed by a processor, steps of the charge equalization method for the vehicle battery pack according to the aforementioned embodiments are implemented.

The present application may achieve the following beneficial effects:
(1) Equalization conditions are increased in the present application, equalization opportunities are increased through multi-point equalization triggering conditions. Meeting any one of the equalization conditions indicates that the vehicle meets the equalization condition for triggering the equalization. In this way, conditions for triggering equalization of the battery are increased, thereby increasing equalization opportunities of the vehicle battery pack.
(2) According to the present application, a precise calculation of the equalization duration and the charge amount required for the equalization is achieved according to data such as the battery voltage, the battery level, the battery current, or the like. It enables the use of the calculated equalization duration and charge amount required for the equalization during subsequent discharging equalization or supplemental charging equalization, and the equalization mode can be intelligently selected according to the use scenario and the use habit of users, thereby enhancing the safety of equalization for the vehicle battery pack.
(3) According to the present application, a selection of the supplemental charging equalization or the discharging equalization is made according to a comparison between the number of low-voltage cells and the preset number of battery cells. The storage battery with a preset voltage is selected to perform supplemental charging on a low-voltage cell through a high-low voltage direct current to direct current converter until a target charge amount for the equalization is reached, thereby reducing equalization loading, improving an equalization efficiency, and reducing the load of the equalization system with resistive energy consumption. Alternatively, the discharging equalization is selected, that is, a charge amount of a high-charge battery cell is reduced to the target charge amount using a resistive power-consumption method, the high-charge cell consumes power, resulting in a small equalization current.
(4) The present application allows the vehicle to perform reverse supplemental charging when the battery level of the storage battery falls below a certain SOC, that is, supplemental charging on the storage battery is achieved using the vehicle battery pack. After the supplemental charging on the storage battery is completed, if the equalization condition is met, the supplemental charging equalization continues. Alternatively, when the supplemental charging cannot be performed or reaches the target charge amount, the supplemental charging is stopped. This prevents the storage battery from being unable to perform equalization operations on the vehicle battery pack due to insufficient charge.
(5) According to the present application, when it is detected that a vehicle meets one of multiple equalization conditions, relevant battery data of the vehicle battery pack is collected, and an equalization duration and a charge amount required for the equalization are obtained through calculation. Then, an equalization mode is intelligently selected according to different use scenarios and use habits of users. This allows the equalization duration to be calculated as accurately as possible, thereby avoiding equalization errors. Finally, according to a comparison between the number of low-voltage cells and a preset number of battery cells, a supplemental charging equalization or a discharging equalization is performed. The supplemental charging equalization is to select a storage battery with a preset voltage to perform supplemental charging on a low-voltage cell until a target charge amount for the equalization is reached, thereby reducing equalization loading, improving an equalization efficiency, and reducing the load of the equalization system with resistive energy consumption. The discharging equalization is to reduce a charge amount of a high-charge battery cell to the target charge amount by using a resistive power-consumption method. This process involves discharging of the high-charge battery cell with a small equalization current, thereby improving the performance and service life of the vehicle battery pack.

The additional aspects and advantages of the present application will be partially given in the description below, and partially will become obvious from the description below, or will be known through the practice of the present application.

### BRIEF DESCRIPTION OF DRAWINGS

In order to more clearly illustrate technical solutions in embodiments of the present application or in the prior art, a brief introduction of drawings required to be used in the description of the embodiments or the prior art is provided below. It is obvious that the drawings described below are some embodiments of the present application. For ordinary person skilled in the art, other drawings can also be obtained according to these drawings without paying creative labor.
FIG. 1 is a flowchart according to a preferable embodiment of a charge equalization method for a vehicle battery pack of the present application.
FIG. 2 is a schematic diagram of an OCV-SOC curve of a lithium iron phosphate battery cell according to a preferable embodiment of a charge equalization method for a vehicle battery pack of the present application.
FIG. 3 is a schematic diagram of a dQ/dV-SOC curve of a lithium iron phosphate battery during constant current charging according to a preferable embodiment of a charge equalization method for a vehicle battery pack of the present application.
FIG. 4 is a flowchart of an intelligent equalization strategy according to a preferable embodiment of a charge equalization method for a vehicle battery pack of the present application.
FIG. 5 is a schematic diagram of an equalization circuit according to a preferable embodiment of a charge equalization method for a vehicle battery pack of the present application.
FIG. 6 is a flowchart showing specific implementation steps of an entire execution process according to a preferable embodiment of a charge equalization method for a vehicle battery pack of the present application.
FIG. 7 is a schematic structural diagram according to a preferable embodiment of a charge equalization system for a vehicle battery pack of the present application.
FIG. 8 is a schematic structural diagram according to a preferable embodiment of a vehicle of the present application.

Herein, 10- charge equalization system for a vehicle battery pack; 100-data collecting module; 200-equaliziation calculating module; 300-equaliziation controlling module; 501-memory; 502-processor; and 503-combmunication interface.

### DESCRIPTION OF EMBODIMENTS

Embodiments of the present application are described in detail below, and examples of the embodiments are shown in drawings, where the same reference numerals throughout represent the same or similar components or components having the same or similar functions. The embodiments described below with reference to drawings are exemplary and are intended to explain the present application, but should not be understood as limiting the present application.

There is a passive equalization system for a lithium iron phosphate battery pack in the prior art. This system uses a precise difference in remaining charge SOC as a basis for equalization, and performs an action of passive equalization when the lithium iron phosphate battery pack is at a high-voltage end. It separates screening of the basis for equalization determination and an execution of the equalization action, meaning that after the separation, the timing for the equalization determination and the execution does not necessarily coincide. It provides a complete passive equalization solution, and allows for long time equalization once the equalization is initiated. But it can only identify and screen out the cell(s) to be equalized and determine an equalization capacity during certain SOC periods. In addition, with long-term use of the battery pack in the lithium iron phosphate battery's plateau area, an equalization duration cannot be accurately calculated, and opportunities for equalization are limited. Moreover, during execution of the equalization, a high-charge cell consumes power, resulting in a small equalization current and energy waste. When only an individual cell has a low voltage, the load of the equalization system is high, and the required equalization duration is long. In the prior art, the equalization method can also be determined based on different scenarios, including a driving equalization method, a charging equalization method, a short-term storage equalization method, and a long-term storage equalization method. It makes the equalization duration more accurate by determining the equalization duration with different scenarios. However, its essence is still to calculate the equalization duration by performing an OCV-SOC (open circuit voltage-state of charge of the battery) curve table lookup. In each equalization scenario, if the SOC interval of the battery pack falls within a plateau voltage segment of the lithium iron phosphate battery, the equalization duration cannot be accurately calculated. During the execution of the equalization, a high-charge cell consumes power, resulting in a small equalization current. When only an individual cell has a low voltage, the load of the equalization system is high, the required equalization duration is long and energy is wasted.

Traditional lithium iron phosphate passive equalization requires determining a static duration first. Before and after restart, a time should be greater than 2 hours or a current should be less than 0.03C (C represents a current rate, for example, for a 28 Ah battery cell, 1C discharge is 28 A, and 0.03C discharge is 0.03*28 A). Only after the static duration exceeds 2h can an open circuit voltage of a battery cell be read, and the equalization duration can only be calculated in a non-plateau voltage area. Due to voltage characteristics of the lithium iron phosphate battery pack and the lithium iron phosphate, opportunities for equalization are limited. This limitation makes it difficult to accurately calculate the equalization duration, resulting in disadvantages of more equalization errors and long passive equalization duration. Failure to equalize in time or equalization errors will increase a voltage difference between battery cells and aggravate inconsistency, which reduces the service life and performance of the lithium iron phosphate battery pack. In severe cases, it may even induce battery pack damage or create safety hazards. The present application intends to provide a multi-point triggered, high-efficiency and intelligent equalization strategy applied for lithium iron phosphate battery packs. This strategy aims to solve the equalization problems of lithium iron phosphate battery packs and improve the performance and service life of the lithium iron phosphate battery packs.

In the following, a charge equalization method and system for a vehicle battery pack, and a vehicle according to the embodiments of the present application will be provided with reference to the drawings. In view of the problem mentioned in the background, the voltage characteristics of the vehicle battery pack (lithium iron phosphate) limits the opportunities for equalization. This limitation makes it difficult to accurately calculate the equalization duration, resulting in relatively frequent equalization errors and long passive equalization duration. These issues reduce the service life and performance of the vehicle battery pack (lithium iron phosphate battery pack), and even induce battery pack damage or create safety hazards. To address the problems, the present application provides a charge equalization method for a vehicle battery pack. In this method, when it is detected that a vehicle meets one of multiple equalization conditions, relevant battery data of the vehicle battery pack is collected, and an equalization duration and a charge amount required for the equalization are obtained through calculation. Then, an equalization mode is intelligently selected according to different use scenarios and use habits of users. This allows the equalization duration to be calculated as accurately as possible, thereby avoiding equalization errors. Finally, according to a comparison between the number of low-voltage cells and a preset number of battery cells, a supplemental charging equalization or a discharging equalization is selected. The supplemental charging equalization is to select a storage battery with a preset voltage to perform supplemental charging on a low-voltage cell until a target charge amount for the equalization is reached, thereby reducing equalization loading, improving equalization efficiency, and reducing the load of the equalization system with resistive energy consumption. The discharging equalization is to reduce a charge amount of a high-charge battery cell to the target charge amount by using a resistive power-consumption method. This process involves discharging of the high-charge battery cell with a small equalization current, thereby improving the performance and service life of the vehicle battery pack. As a result, the technical problems in the related art are solved. These problems arise due to the voltage characteristics of the vehicle battery pack (lithium iron phosphate), which limits the opportunities for equalization. This limitation makes it difficult to accurately calculate the equalization duration, resulting in relatively frequent equalization errors and long passive equalization duration. These issues reduce the service life and performance of the vehicle battery pack (lithium iron phosphate battery pack), and even induce battery pack damage or create safety hazards.

In the present application, if a vehicle is in a powered-on state and the vehicle meets an equalization condition for triggering equalization, collecting battery data of the vehicle battery pack; calculating to obtain an equalization duration and a charge amount required for the equalization according to the battery data, and selecting an equalization mode according to a use scenario and a use habit; acquiring the number of low-voltage battery cells; if the number of low-voltage battery cells is less than or equal to a preset number of battery cells, selecting a storage battery with a preset voltage to perform supplemental charging on the low-voltage battery cells until a target charge amount for the equalization is reached; if the number of low-voltage battery cells is greater than the preset number of battery cells, adopting a resistive power-consumption method to reduce a charge amount of a high-charge battery cell to the target charge amount, thereby improving the performance and service life of the vehicle battery pack.

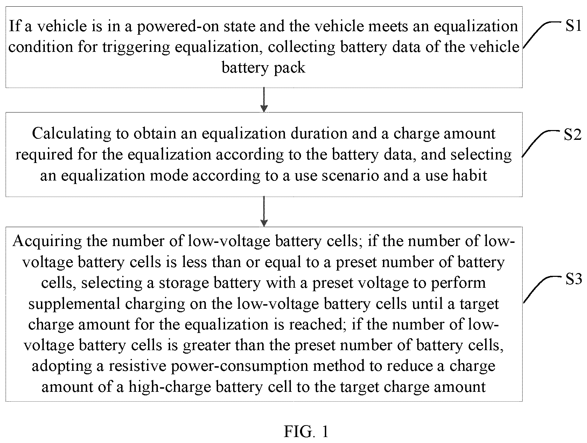

Specifically, FIG. 1 is a flowchart according to a preferable embodiment of a charge equalization method for a vehicle battery pack of the present application.

As shown in FIG. 1, the charge equalization method for a vehicle battery pack includes the following steps.

In step S1, if a vehicle is in a powered-on state, and the vehicle meets an equalization condition for triggering equalization, collecting battery data of the vehicle battery pack.

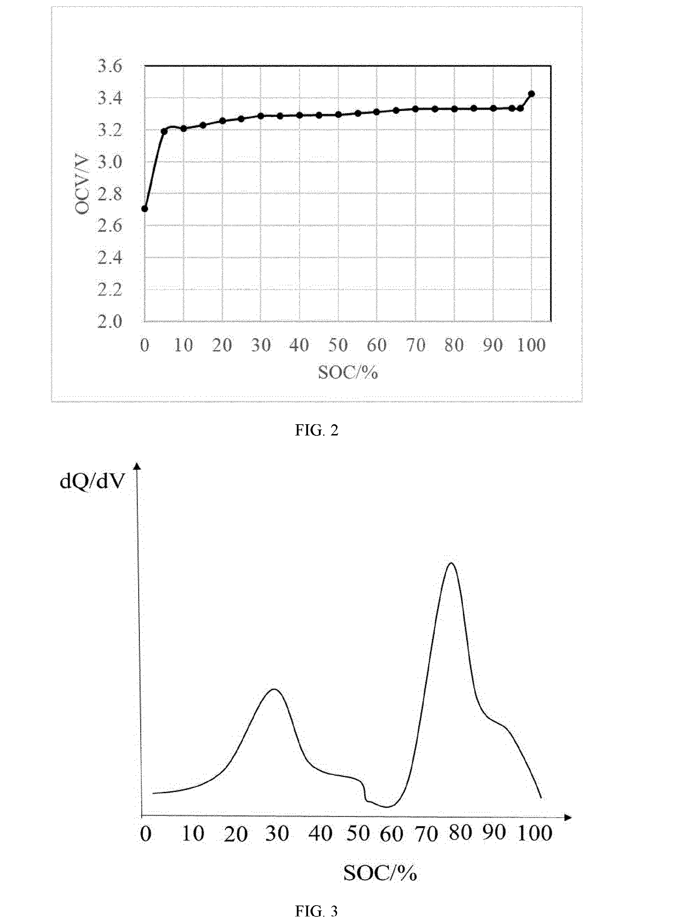

It can be understood that the vehicle battery pack described in the embodiments of the present application includes a lithium iron phosphate battery pack. The multi-point triggered, high-efficiency and intelligent equalization of the present application mainly targets the lithium iron phosphate battery pack. FIG. 2 shows an OCV-SOC curve of a lithium iron phosphate battery cell. As shown in FIG. 2, it can be seen that within 30-95% SOC interval range, the OCV variation is not obvious, and the slope is insufficient to support SOC correction and calculation of equalization duration. Therefore, the present application increases the SOC interval of the lithium iron phosphate that can be used to calculate the equalization duration as much as possible.

Therefore, the equalization condition in the embodiments of the present application includes (that is, equalization start condition): a minimum SOC of a battery cell is greater than a first percentage (for example, the first percentage is preferably 10%), a difference between a maximum SOC of a battery cell and the minimum SOC of the battery cell is greater than a second percentage (for example, the second percentage is preferably 2%), a maximum voltage difference of battery cells is greater than a preset voltage value (for example, the preset voltage value is preferably 10 mV), a remaining equalization duration is greater than 0, absence of faults in an entire vehicle, an equalization circuit temperature is less than a first temperature (for example, the first temperature is preferably 80°C) and a battery cell temperature is less than a second temperature (for example, the second temperature is preferably 55°C), a battery level of the storage battery during supplemental charging equalization is greater than a third percentage SOC (for example, the third percentage is preferably 30%). Meeting any one of the equalization conditions indicates that the vehicle meets the equalization condition for triggering the equalization.

The reason for providing multiple equalization conditions in the embodiments of the present application is to increase equalization opportunities through multi-point equalization triggering conditions. The equalization conditions involve a minimum SOC of a battery cell, the difference between a maximum SOC of a battery cell and the minimum SOC of the battery cell, the maximum voltage difference of battery cells, the remaining equalization duration, the absence of faults in the entire vehicle, the equalization circuit temperature and the battery cell temperature, the battery level of the storage battery during supplemental charging equalization. Meeting any one of the equalization conditions indicates that the vehicle meets the equalization condition for triggering the equalization. In this way, conditions for triggering equalization of the battery are increased, thereby increasing equalization opportunities of the vehicle battery pack. In the present application, equalization opportunities are increased through multi-point triggering conditions. In addition to traditional static equalization object screening and equalization duration calculation within the SOC interval of 10%-30%, the static equalization object screening and equalization duration calculation in a low SOC interval (such as 3%-10%) are also introduced, constant current charging equalization object screening and equalization duration calculation at 50% SOC and below, alternating current full-charge equalization, and high voltage-difference equalization screening.

The battery data in the embodiments of the present application includes a battery voltage, a battery level and a battery current. In the embodiments of the present application, after the vehicle is in the powered-on state, and the vehicle meets an equalization condition for triggering equalization, data of the vehicle battery pack, such as the battery voltage, the battery level, the battery current, etc. are collected, thus facilitating a precise calculation of the equalization duration and the charge amount required for the equalization according to these data such as the battery voltage, the battery level, the battery current, or the like.

In step S2, calculating to obtain an equalization duration and a charge amount required for the equalization according to the battery data, and selecting an equalization mode according to a use scenario and a use habit.

It can be understood that, the equalization duration in the embodiments of the present application includes a passive resistance equalization duration and a supplemental charging equalization duration with the storage battery. The passive resistance equalization duration = ΔE/(I 2 *R), where ΔE is an equalization charge amount, I is an equalization current, and R is an equalization resistance. The supplemental charging equalization duration with the storage battery = ΔE/(P*η), where ΔE is an equalization charge amount, P is an equalization power of the storage battery, and η is a loss factor. In the embodiments of the present application, the passive resistance equalization is to perform equalization through a resistive power-consumption method, and the supplemental charging equalization with the storage battery is to perform supplemental charging equalization using the storage battery (a 12V storage battery is preferable in the present application). The passive resistance equalization duration is obtained through calculation according to the equalization charge amount, the equalization current, and the equalization resistance, and the supplemental charging equalization duration with the storage battery is obtained through calculation according to the equalization charge amount, the equalization power of the storage battery, and the loss factor. It enables the use of the calculated equalization duration during subsequent discharging equalization or supplemental charging equalization to calculate the equalization duration as accurately as possible, thereby avoiding equalization errors.

FIG. 3 shows a dQ/dV-SOC curve of a lithium iron phosphate battery during constant current charging. As shown in FIG. 3, during the constant current charging, when the SOC is below 50%, dQ/dV can be accurately correlated with SOC. If it is in a direct current charging state which employs a stepwise constant current charging method, when the SOC is below 50%, the charge amount required for the equalization can be accurately calculated using the dQ/dV-SOC curve of the lithium iron phosphate battery during constant current charging.

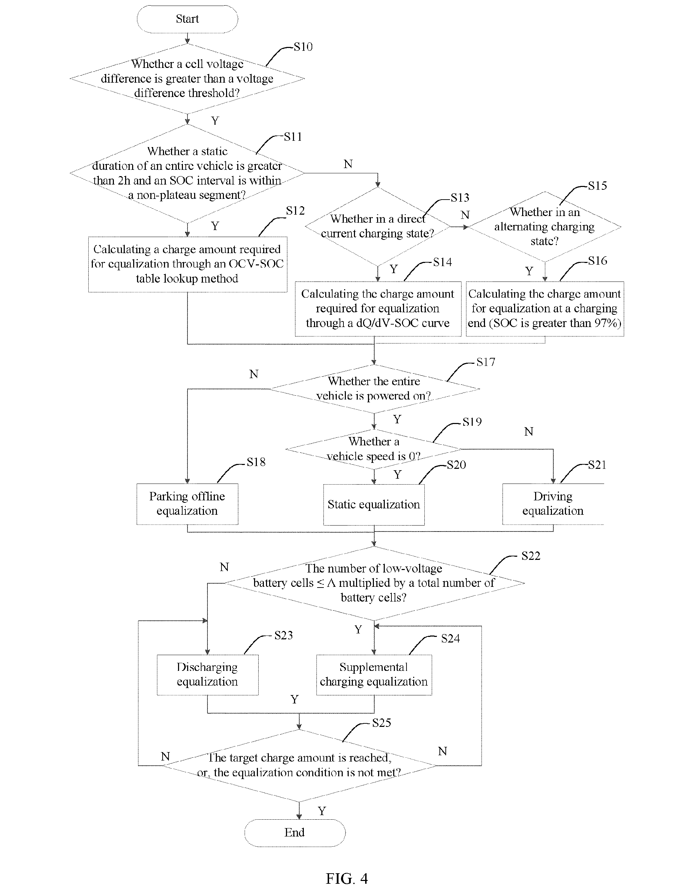

Furthermore, as shown in FIG. 4, acquiring a cell voltage difference, and determining whether the cell voltage difference is greater than a voltage difference threshold. If the cell voltage difference is greater than the voltage difference threshold, determining whether a static duration of an entire vehicle is greater than a preset time (for example, the preset time is preferably 2h), and determining whether an SOC interval is within a preset SOC interval range (for example, the preset SOC interval range is preferably 10%-30%). If the static duration of the entire vehicle is greater than the preset time (2h), and the SOC interval is within the preset SOC interval range (10%-30%), selecting an OCV-SOC table lookup method to calculate the charge amount required for the equalization. If the static duration of the entire vehicle is not greater than the preset time (2h), or the SOC interval is not within the preset SOC interval range (10%-30%), determining whether the vehicle is in a direct current charging state. If the vehicle is in the direct current charging state, calculating the charge amount required for the equalization through a constant current charging dQ/dV-SOC curve of the lithium iron phosphate battery pack (FIG. 3). If the vehicle is not in the direct current charging state, determining whether the vehicle is in an alternating charging state. If the vehicle is in the alternating charging state, performing screening for battery cells at a charging end, and when it is greater than a fourth percentage SOC (for example, the fourth percentage is preferably 97%), calculating the charge amount required for the equalization.

According to the embodiments of the present application, the method for calculating the charge amount required for the equalization can be selected based on determinations related to the cell voltage difference, the static duration of the entire vehicle, the SOC interval, the direct current and alternating current charging states. There are three methods for calculating the charge amount required for the equalization, which are the OCV-SOC table lookup method, the dQ/dV-SOC curve of the vehicle battery pack during constant current charging, and calculation at the charging end. Based on these methods, the charge amount required for the equalization can be accurately determined, thereby enabling the use of the calculated charge amount required for the equalization during subsequent discharging equalization or supplemental charging equalization.

Furthermore, as shown in FIG. 4, the equalization scenarios are divided into three categories. Determining whether the entire vehicle is powered on. If the entire vehicle is not powered on, adopting parking offline equalization. If the entire vehicle is powered on, determining whether a vehicle speed is 0. If the vehicle speed is 0, adopting static equalization. If the vehicle speed is not 0, adopting driving equalization. In the embodiments of the present application, the equalization mode can be intelligently selected according to the use scenario and the use habit of users. The equalization mode includes the parking offline equalization, the static equalization and the driving equalization. This enables the selection of the most appropriate equalization mode according to different situations, thereby enhancing the safety of equalization for the vehicle battery pack.

In step S3, acquiring the number of low-voltage battery cells; if the number of low-voltage battery cells is less than or equal to a preset number of battery cells, selecting a storage battery with a preset voltage to perform supplemental charging on the low-voltage battery cells until a target charge amount for the equalization is reached; if the number of low-voltage battery cells is greater than the preset number of battery cells, adopting a resistive power-consumption method to reduce a charge amount of a high-charge battery cell to the target charge amount.

It can be understood that, as shown in FIG. 4, the preset number of battery cells in the present application = A * a total number of battery cells (different battery cells lead to different charge amounts). Acquiring the number of low-voltage battery cells, determining whether the number of low-voltage battery cells is less than or equal to A multiplied by a total number of battery cells, where A is a constant less than 0. If the number of low-voltage cells is less than or equal to A multiplied by the total number of battery cells, selecting the storage battery with the preset voltage (12V) to perform supplemental charging on the low-voltage battery cell(s) through a high-low voltage direct current to direct current (DC-DC) converter until the target charge amount for the equalization is reached. If the number of low-voltage cells is greater than A multiplied by the total number of battery cells, adopting the resistive power-consumption method to reduce the charge amount of the high-charge battery cell to the target charge amount.

In the embodiments of the present application, a selection of the supplemental charging equalization or the discharging equalization is made according to a comparison between the number of low-voltage cells and the preset number of battery cells. If whether the number of low-voltage battery cells is less than or equal to A multiplied by the total number of battery cells, the supplemental charging equalization is selected. That is, selecting a storage battery with a preset voltage to perform supplemental charging on a low-voltage cell through a high-low voltage direct current to direct current converter until a target charge amount for the equalization is reached, thereby reducing equalization loading, improving equalization efficiency, and reducing the load of the equalization system with resistive energy consumption. If the number of low-voltage battery cells is greater than A multiplied by the total number of battery cells, the discharging equalization is selected, that is, a charge amount of a high-charge battery cell is reduced to the target charge amount using a resistive power-consumption method, the high-charge cell consumes power, resulting in a small equalization current.

Specifically, as shown in FIG. 4, a process of the intelligent equalization strategy of the present application is as follows.

### Start

Step S10: acquiring a cell voltage difference, and determining whether the cell voltage difference is greater than a voltage difference threshold. If the cell voltage difference is greater than the voltage difference threshold, executing step S11.

Step S11: determining whether a static duration of an entire vehicle is greater than 2h, and determining whether an SOC interval is within a non-plateau segment (that is, whether the SOC interval is within 10%-30%). If the static duration of the entire vehicle is greater than 2h, and the SOC interval is within the non-plateau segment, executing step S12;
if the static duration of the entire vehicle is not greater than 2h, or, the SOC interval is not within the non-plateau segment, executing step S13.

Step S12: if the static duration of the entire vehicle is greater than 2h, and the SOC interval is within the non-plateau segment, selecting an OCV-SOC table lookup method to calculate the charge amount required for the equalization.

Step S13: determining whether the vehicle is in a direct current charging state. If the vehicle is in the direct current charging state, executing step S14;
if the vehicle is not in the direct current charging state, executing step S15.

Step S14: if the vehicle is in the direct current charging state, calculating the charge amount required for the equalization through a constant current charging dQ/dV-SOC curve of the lithium iron phosphate battery.

Step S15: if the vehicle is not in the direct current charging state, determining whether the vehicle is in an alternating charging state. If the vehicle is in the alternating charging state, executing step S16.

Step S16: if the vehicle is in the alternating charging state, performing screening for battery cells at a charging end, and when the SOC is greater than 97%, calculating the charge amount required for the equalization.

Step S17: determining whether the entire vehicle is powered on. If the entire vehicle is not powered on, executing step S18; if the entire vehicle is powered on, executing step S19.

Step S18: if the entire vehicle is not powered on, adopting parking offline equalization.

Step S19: determining whether a vehicle speed is 0. If the vehicle speed is 0, executing step S20;
if the vehicle speed is not 0, executing step S21.

Step S20: if the vehicle speed is 0, adopting static equalization.

Step S21: if the vehicle speed is not 0, adopting driving equalization.

Step S22: acquiring the number of low-voltage battery cells, determining whether the number of low-voltage battery cells is less than or equal to A multiplied by a total number of battery cells. If the number of low-voltage cells is greater than A multiplied by the total number of battery cells, executing step S23;
if the number of low-voltage cells is less than or equal to A multiplied by the total number of battery cells, executing step S24.

Step S23: if the number of low-voltage cells is greater than A multiplied by the total number of battery cells, adopting the resistive power-consumption method (discharging equalization) to reduce the charge amount of the high-charge battery cell to the target charge amount.

Step S24: if the number of low-voltage cells is less than or equal to A multiplied by the total number of battery cells, selecting the storage battery with the preset voltage (12V) to perform supplemental charging (supplemental charging equalization) on the low-voltage battery cells through a high-low voltage direct current to direct current (DC-DC) converter until the target charge amount for the equalization is reached.

Step S25: determining whether the target charge amount is reached or whether the equalization condition is not met. If the target charge amount for the equalization is reached, or, the equalization condition is not met, the process is ended;
if the target charge amount for the equalization is not reached, or, the equalization condition is met, returning to step S23 or step S24.

### End

Furthermore, when performing supplemental charging on the low-voltage battery cells using the storage battery with the preset voltage (12V), if a battery level of the storage battery is lower than a fifth percentage (for example, the fifth percentage is preferably 30%) SOC, excluding the storage battery from the equalization, and the vehicle battery pack performs supplemental charging on the storage battery (that is, reverse charging). If the equalization condition is met, controlling the storage battery for supplemental charging equalization, if supplemental charging reaches the target charge amount or a condition for the supplemental charging is not met, stopping the supplemental charging. This embodiment of the present application allows the vehicle to perform reverse charging when the battery level of the storage battery falls below a certain SOC, that is, supplemental charging on the storage battery is achieved using the vehicle battery pack. After the supplemental charging on the storage battery is completed, if the equalization condition is met, the supplemental charging equalization continues. Alternatively, when the supplemental charging cannot be performed or reaches the target charge amount, the supplemental charging is stopped. This prevents the storage battery from being unable to perform equalization operations on the vehicle battery pack due to insufficient charge.

In the present application, a 12V storage battery is used for supplemental charging on low-voltage cells, reducing the load of the equalization and improving equalization efficiency. When some cells' voltages are below an average voltage and a standard equalization voltage difference is reached, the 12V low-voltage power source (storage battery) can be used to charge the cells through a DC-DC module of a vehicle-mounted OBC in reverse. The current of the supplemental charging is relatively large, resulting in high equalization efficiency. When the 12V low-voltage power source (storage battery) has a relatively low battery level, the equalization is stopped, and the battery pack performs supplemental charging on the 12V low-voltage power source (storage battery). This can improve the equalization efficiency and reduce the load of the equalization system with resistive energy consumption.

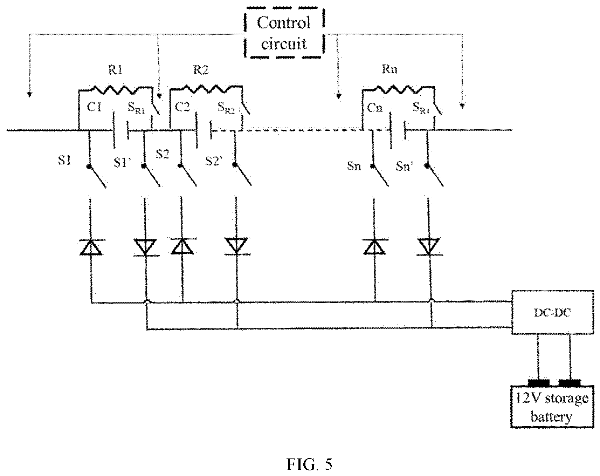

Furthermore, FIG. 5 is a schematic diagram of an equalization circuit of the present application. In the embodiments of the present application, an equalization system can perform energy dissipation equalization on cells with excessive energy through resistances, and can also perform supplemental charging on cells with low voltage using a 12V storage battery through a DC-DC converter. A voltage of each battery cell is collected in real-time, and whether the equalization condition is met is determined according to the collected data and the state of the entire vehicle, an appropriate equalization strategy is then selected according to the vehicle's state and the battery's state. For example, when it is determined that the voltage of the battery cell Cl in FIG. 5 is too high and the equalization discharge condition is met, discharging is required, a control circuit opens the corresponding discharge circuit, and discharging is achieved through the equalization resistance (R1 in FIG. 5). The discharge equalization automatically stops when the target value is reached (or the condition for limiting the equalization is met). When it is determined that the voltage of the battery cell C1 in FIG. 5 is too low and the condition for supplemental charging equalization is met, supplemental charging is required, the control circuit opens the corresponding supplemental charging circuit, and supplemental charging is achieved using the 12V storage battery. When the battery level of the 12V storage battery falls below 30% SOC, the vehicle battery pack (large battery pack) performs supplemental charging on the 12V storage battery through a DC-DC converter. After the supplemental charging on the 12V storage battery is completed, the supplemental charging equalization continues. The supplemental charging automatically stops when the target value is reached or the condition for supplemental charging is not met. By combining the supplemental charging equalization and resistive discharging equalization, the equalization efficiency is improved, and the load of the equalization system is reduced.

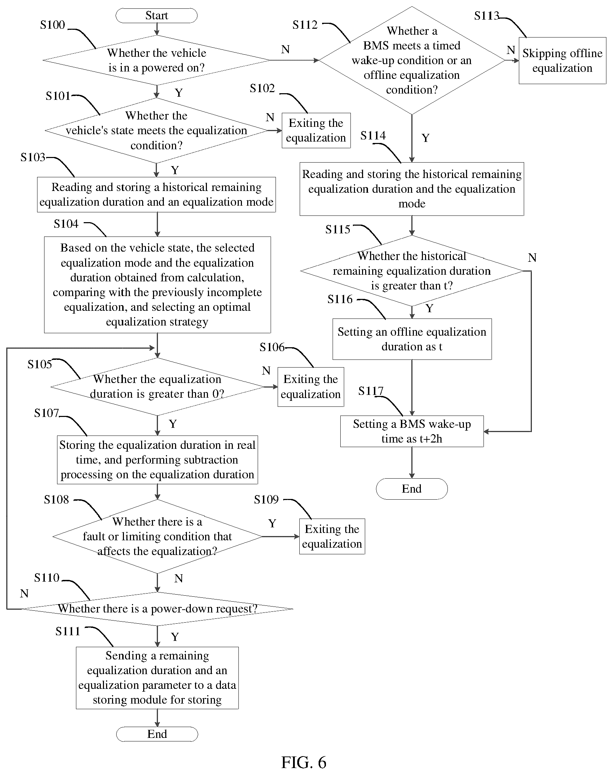

In the following, an entire implementation process will be further described according to the steps of the charge equalization method for the vehicle battery pack of the present application, as shown in FIG. 6:

### Start

Step S100: determining whether a vehicle is in a powered-on state. If the vehicle is in the powered-on state, executing step S101;
if the vehicle is not in the powered-on state, executing step S112.

Step S101: if the vehicle is in the powered-on state, determining whether the vehicle meets an equalization condition. If the vehicle meets the equalization condition, executing step S103;
if the vehicle does not meet the equalization condition, executing step S102.

Step S102: if the vehicle does not meet the equalization condition, exiting the equalization.

Step S103: if the vehicle meets the equalization condition, reading a historical remaining equalization duration and an equalization mode.

Step S104: selecting an equalization mode according to the current state of the vehicle, calculating an equalization duration, and comparing the equalization duration with historical equalization information to select an optimal equalization strategy.

Step S105: determining whether the equalization duration is greater than 0. If the equalization duration is equal to 0, executing step S106;
if the equalization duration is greater than 0, executing step S107.

Step S106: if the equalization duration is equal to 0, exiting the equalization.

Step S107: if the equalization duration is greater than 0, storing the equalization duration in real time, and performing subtraction processing on the equalization duration. After a certain period of equalization (which varies depending on different equalization systems and different battery packs), performing a determination of the equalization condition, subtracting the equalized duration from said equalization duration to obtain a remaining equalization duration.

Step S108: determining whether there is a fault or limiting condition that affects the equalization. if there is the fault or limiting condition that affects the equalization, executing step S109;
if there is no fault or limiting condition that affects the equalization, executing step S110.

Step S109: if there is the fault or limiting condition that affects the equalization, exiting the equalization.

Step S110: if there is no fault or limiting condition that affects the equalization, determining whether a power-down request is detected (a controller of the entire vehicle will send a signal of power-down request). If the power-down request is not detected, executing step S105 (that is, continue to determine whether the equalization duration is greater than 0);
if the power-down request is detected, executing step S111.

Step S111: storing a remaining equalization duration and an equalization parameter, and then powering down.

Step S112: if the vehicle is not in the powered-on state, determining whether a BMS system meets a timed wake-up condition or an offline equalization condition. If the BMS system does not meet the timed wake-up condition or does not meet the offline equalization condition, executing step S113;
if the BMS system meets the timed wake-up condition or the offline equalization condition, executing step S114.

Step S113: if the BMS system does not meet the timed wake-up condition (when the vehicle is parked for a long time without starting, the entire vehicle will awake the BMS system at certain time intervals) or does not meet the offline equalization condition, skipping the offline equalization.

Step S114: if the BMS system meets the timed wake-up condition or the offline equalization condition, reading the historical remaining equalization duration and the equalization mode.

Step S115: determining whether a remaining equalization duration is greater than an offline equalization duration threshold t. If the remaining equalization duration is greater than the offline equalization duration threshold t, executing step S116;
if the remaining equalization duration is not greater than the offline equalization duration threshold t, executing step S117.

Step S116: if the remaining equalization duration is greater than the offline equalization duration threshold, setting the offline equalization duration as the offline equalization duration threshold (t), and performing the offline equalization.

Step S117: setting a BMS wake-up time as a sum of the offline equalization duration threshold and 2h (an accurate open circuit voltage OCV can be obtained only when a static duration of the battery is more than 2h), re-evaluating whether to perform offline equalization.

### End

In summary, in the embodiments of the present application, when it is detected that a vehicle meets one of multiple equalization conditions, relevant battery data of the vehicle battery pack is collected, and an equalization duration and a charge amount required for the equalization are obtained through calculation. Then, an equalization mode is intelligently selected according to different use scenarios and use habits of users. This allows the equalization duration to be calculated as accurately as possible, thereby avoiding equalization errors. Finally, according to a comparison between the number of low-voltage cells and a preset number of battery cells, a supplemental charging equalization or a discharging equalization is performed. The supplemental charging equalization is to select a storage battery with a preset voltage to perform supplemental charging on a low-voltage cell until a target charge amount for the equalization is reached, thereby reducing equalization loading, improving equalization efficiency, and reducing the load of the equalization system with resistive energy consumption. The discharging equalization is to reduce a charge amount of a high-charge battery cell to the target charge amount by using a resistive power-consumption method. This process involves discharging of the high-charge battery cell with a small equalization current, thereby improving the performance and service life of the vehicle battery pack.

Then, a charge equalization system for a vehicle battery pack provided by an embodiment of the present application will be described with reference to the drawings.

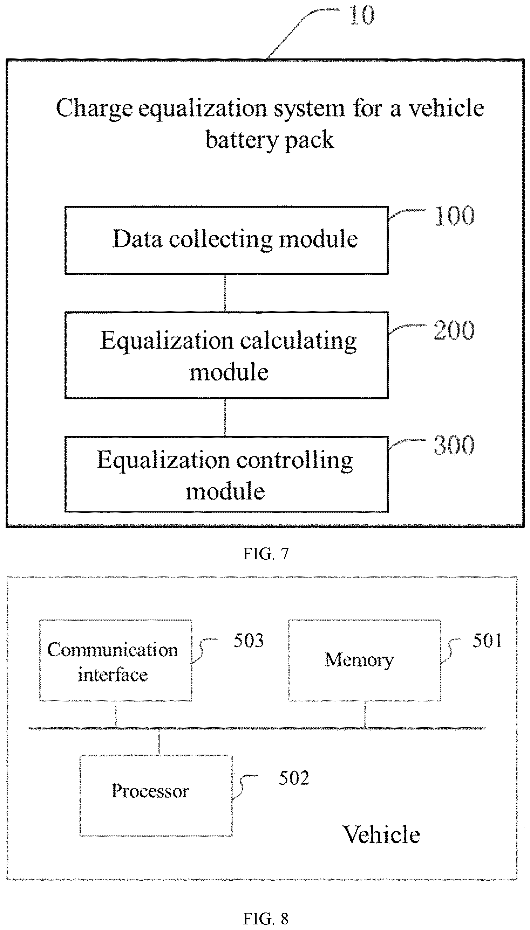

FIG. 7 is a block diagram of a charge equalization system for a vehicle battery pack according to an embodiment of the present application.

As shown in FIG. 7, the charge equalization system 10 for the vehicle battery pack includes: a data collecting module 100, an equalization calculating module 200 and an equalization controlling module 300.

Specifically, the data collecting module 100 is configured to collect battery data of the vehicle battery pack if a vehicle is in a powered-on state and the vehicle meets an equalization condition for triggering equalization.

The equalization calculating module 200 is configured to calculate to obtain an equalization duration and a charge amount required for the equalization according to the battery data, and select an equalization mode according to a use scenario and a use habit.

The equalization controlling module 300 is configured to acquire the number of low-voltage battery cells, if the number of low-voltage battery cells is less than or equal to a preset number of battery cells, select a storage battery with a preset voltage to perform supplemental charging on the low-voltage battery cells until a target charge amount for the equalization is reached, if the number of low-voltage battery cells is greater than the preset number of battery cells, adopt a resistive power-consumption method to reduce a charge amount of a high-charge battery cell to the target charge amount.

Alternatively, in an embodiment of the present application, the equalization condition includes: a minimum SOC of a battery cell is greater than a first percentage, a difference between a maximum SOC of a battery cell and the minimum SOC of the battery cell is greater than a second percentage, a maximum voltage difference of battery cells is greater than a preset voltage value, a remaining equalization duration is greater than 0, absence of faults in an entire vehicle, an equalization circuit temperature is less than a first temperature and a battery cell temperature is less than a second temperature, a battery level of the storage battery during supplemental charging equalization is greater than a third percentage SOC, where meeting any one of the equalization conditions indicates that the vehicle meets the equalization condition for triggering the equalization.

Alternatively, in an embodiment of the present application, the battery data includes a battery voltage, a battery level and a battery current.

Alternatively, in an embodiment of the present application, the equalization duration includes a passive resistance equalization duration and a supplemental charging equalization duration with the storage battery. The passive resistance equalization duration = ΔE/(I 2 *R), where ΔE is an equalization charge amount, I is an equalization current, and R is an equalization resistance. The supplemental charging equalization duration with the storage battery = ΔE/(P*η), where ΔE is an equalization charge amount, P is an equalization power of the storage battery, and η is a loss factor.

Alternatively, in an embodiment of the present application, the equalization calculating module 200 includes: a cell voltage difference acquiring and comparing unit, a static duration and SOC interval determining unit, a first unit for calculating the charge amount required for equalization, a direct charging state determining unit, a second unit for calculating the charge amount required for equalization, an alternating charging state determining unit, and a third unit for calculating the charge amount required for equalization.

Herein, the cell voltage difference acquiring and comparing unit is configured to acquire a cell voltage difference, and determine whether the cell voltage difference is greater than a voltage difference threshold.

The static duration and SOC interval determining unit is configured to, if the cell voltage difference is greater than the voltage difference threshold, determine whether a static duration of an entire vehicle is greater than a preset time, and determine whether an SOC interval is within a preset SOC interval range.

The first unit for calculating the charge amount required for equalization is configured to, if the static duration of the entire vehicle is greater than the preset time, and the SOC interval is within the preset SOC interval range, select an OCV-SOC table lookup method to calculate the charge amount required for the equalization.

The direct charging state determining unit is configured to, if the static duration of the entire vehicle is not greater than the preset time, or, the SOC interval is not within the preset SOC interval range, determine whether the vehicle is in a direct current charging state.

The second unit for calculating the charge amount required for equalization is configured to, if the vehicle is in the direct current charging state, calculate the charge amount required for the equalization through a constant current charging dQ/dV-SOC curve of the vehicle battery pack.

The alternating charging state determining unit is configured to, if the vehicle is not in the direct current charging state, determine whether the vehicle is in an alternating charging state.

The third unit for calculating the charge amount required for equalization is configured to, if the vehicle is in the alternating charging state, perform screening for battery cells at a charging end, and when it is greater than a fourth percentage SOC, calculate the charge amount required for the equalization.

Alternatively, in an embodiment of the present application, the equalization calculating module 200 further includes: a first entire vehicle power-on determining unit, a first equalization mode selecting unit, a vehicle speed determining unit, a second equalization mode selecting unit and a third equalization mode selecting unit.

Herein, the first entire vehicle power-on determining unit is configured to determine whether the entire vehicle is powered on.

The first equalization mode selecting unit is configured to, if the entire vehicle is not powered on, adopt parking offline equalization.

The vehicle speed determining unit is configured to, if the entire vehicle is powered on, determine whether a vehicle speed is 0.

The second equalization mode selecting unit is configured to, if the vehicle speed is 0, adopt static equalization.

The third equalization mode selecting unit is configured to, if the vehicle speed is not 0, adopt driving equalization.

Alternatively, in an embodiment of the present application, the equalization controlling module 300 includes: a low-voltage battery cell number acquiring and comparing unit, a supplemental charging equalization unit and a discharging equalization unit.

Herein, the low-voltage battery cell number acquiring and comparing unit is configured to acquire the number of low-voltage battery cells, determine whether the number of low-voltage battery cells is less than or equal to A multiplied by a total number of battery cells, where A is a constant less than 0.5.

The supplemental charging equalization unit is configured to, if the number of low-voltage cells is less than or equal to A multiplied by the total number of battery cells, select the storage battery with the preset voltage to perform supplemental charging on the low-voltage battery cells through a high-low voltage direct current to direct current converter until a target charge amount for the equalization is reached.

The discharging equalization unit is configured to, if the number of low-voltage cells is greater than A multiplied by the total number of battery cells, adopt the resistive power-consumption method to reduce the charge amount of the high-charge battery cell to the target charge amount.

Alternatively, in an embodiment of the present application, the charge equalization system 10 for the vehicle battery pack further includes: a reverse supplemental charging unit, an equalization duration determining unit, an equalization duration processing unit, a fault or limiting condition determining unit, a power-down request determining unit, a storing and powering down unit, a BMS system determining unit, an equalization duration and mode reading unit, a historical remaining equalization duration determining unit, an offline equalizing unit, a first wake-up time setting unit, and a second wake-up time setting unit.

Herein, the reverse supplemental charging unit is configured to, when performing supplemental charging on the low-voltage battery cells using the storage battery with the preset voltage, if a battery level of the storage battery is lower than a fifth percentage SOC, exclude the storage battery from the equalization, and perform supplemental charging on the storage battery using the vehicle battery pack; if the equalization condition is met, control the storage battery for supplemental charging equalization, if supplemental charging reaches the target charge amount or a condition for the supplemental charging is not met, stop the supplemental charging.

The equalization duration determining unit is configured to determine whether the equalization duration is greater than 0.

The equalization duration processing unit is configured to, if the equalization duration is greater than 0, store the equalization duration in real time, and perform subtraction processing on the equalization duration.

The fault or limiting condition determining unit is configured to determine whether there is a fault or limiting condition that affects the equalization.

The power-down request determining unit is configured to, if there is no fault or limiting condition that affects the equalization, determine whether a power-down request is detected.

The storing and powering down unit is configured to, if the power-down request is detected, store a remaining equalization duration and an equalization parameter, and then power down.

The BMS system determining unit is configured to, if the vehicle is not in the powered-on state, determine whether the BMS system meets a timed wake-up condition or an offline equalization condition.

The equalization duration and mode reading unit is configured to, if the BMS system meets the timed wake-up condition or the offline equalization condition, read a historical remaining equalization duration and an equalization mode.

The historical remaining equalization duration determining unit is configured to determine whether the historical remaining equalization duration is greater than an offline equalization duration threshold.

The offline equalizing unit is configured to, if the historical remaining equalization duration is greater than the offline equalization duration threshold, set an offline equalization duration as the offline equalization duration threshold, and perform offline equalization.

The first wake-up time setting unit is configured to set a BMS wake-up time as a sum of the offline equalization duration threshold and a preset time.

The second wake-up time setting unit is configured to, if the historical remaining equalization duration is not greater than the offline equalization duration threshold, directly set the BMS wake-up time as the sum of the offline equalization duration threshold and the preset time.

Alternatively, in an embodiment of the present application, the vehicle battery pack includes a lithium iron phosphate battery pack.

It should be noted that the aforementioned explanations provided for embodiments of the charge equalization method for the vehicle battery pack are also applicable to the charge equalization system for the vehicle battery pack in the embodiment, which will not be described in detail herein.

According to the charge equalization system for the vehicle battery pack in the embodiments of the present application, when it is detected that a vehicle meets one of multiple equalization conditions, relevant battery data of the vehicle battery pack is collected, and an equalization duration and a charge amount required for the equalization are obtained through calculation. Then, an equalization mode is intelligently selected according to different use scenarios and use habits of users. This allows the equalization duration to be calculated as accurately as possible, thereby avoiding equalization errors. Finally, according to a comparison between the number of low-voltage cells and a preset number of battery cells, a supplemental charging equalization or a discharging equalization is performed. The supplemental charging equalization is to select a storage battery with a preset voltage to perform supplemental charging on a low-voltage cell until a target charge amount for the equalization is reached, thereby reducing equalization loading, improving equalization efficiency, and reducing the load of the equalization system with resistive energy consumption. The discharging equalization is to reduce a charge amount of a high-charge battery cell to the target charge amount by using a resistive power-consumption method. This process involves discharging of the high-charge battery cell with a small equalization current, thereby improving the safety performance and service life of the vehicle battery pack.

As a result, the technical problems in the related art are solved. These problems arise due to the voltage characteristics of the vehicle battery pack (lithium iron phosphate), which limits the opportunities for equalization. This limitation makes it difficult to accurately calculate the equalization duration, resulting in relatively frequent equalization errors and long passive equalization duration. These issues reduce the service life and performance of the vehicle battery pack (lithium iron phosphate battery pack), and even induce battery pack damage or create safety hazards.

FIG. 8 is a schematic structural diagram of a vehicle provided by an embodiment of the present application. The vehicle may include:
a memory 501, a processor 502 and a computer program which is stored in the memory 510 and executable on the processor 502.

When the program is executed by the processor 502, the charge equalization methods for a vehicle battery pack provided by the aforementioned embodiments are implemented.

Furthermore, the vehicle further includes:
a communication interface 503, configured for communication between the memory 501 and the processor 502.

The memory 501 is configured to store the computer program that can run on the processor 502.

The memory 501 may include a high-speed RAM memory, and may also include a non-volatile memory (non-volatile memory), such as at least one disk memory.

If the memory 501, the processor 502, and the communication interface 503 are implemented independently, the communication interface 503, the memory 501, and the processor 502 can be interconnected via a bus to complete communication with each other. The bus can be an industry standard architecture (Industry Standard Architecture, abbreviated as ISA) bus, a peripheral component interconnect (Peripheral Component, abbreviated as PCI) bus, or an extended industry standard architecture (Extended Industry Standard Architecture, abbreviated as EIS) bus, etc. The bus can be categorized as an address bus, a data bus, a control bus, etc. For ease of representation, only a single thick line is used in FIG. 8 for representation, but it does not mean that there is only one bus or one type of bus.

Alternatively, in terms of specific implementations, if the memory 501, the processor 502, and the communication interface 503 are integrated on a single chip, the memory 501, the processor 502, and the communication interface 503 can complete communication with each other through internal interfaces.

The processor 502 may be a central processing unit (Central Processing Unit, abbreviated as CPU), or an application specific integrated circuit (Application Specific Integrated Circuit, abbreviated as ASIC), or one or more integrated circuits configured to implement the embodiments of the present application.

This embodiment also provides a computer-readable storage medium, which stores a computer program. When the program is executed by the processor, the aforementioned charge equalization method for the vehicle battery pack is implemented.

In the description of the specification, the reference terms "one embodiment," "some embodiments," "example," "specific example," or "some examples" indicate that the specific features, structures, materials, or characteristics described in conjunction with the embodiment or example are included in at least one embodiment or example of the present application. In this specification, the illustrative expressions of the above terms do not necessarily refer to the same embodiment or example. Moreover, the specific features, structures, materials, or characteristics described can be combined in any one or N embodiments or examples in a suitable manner. In addition, in the absence of mutual contradiction, those skilled in the art can combine different embodiments or examples and the features of different embodiments or examples described in this specification.

In addition, the terms "first," "second" are used for descriptive purposes only and should not be construed as indicating or implying relative importance or implicitly specifying the number of the technical features indicated. Therefore, features specified as "first" and "second" may explicitly or implicitly include at least one such feature. In the description of the present application, the meaning of "N" is at least two, such as two, three, etc., unless otherwise specifically limited.

Any process or method described in the flowchart or otherwise described can be understood as including one or N modules, segments, or portions with executable instructions of code for implementing customized logic functions or processes, and the scope of the preferred embodiments of the present application includes additional implementations in which the functions can be performed not in the order shown or discussed, including in a basically simultaneous manner or in the reverse order according to the functions involved. This should be understood by those skilled in the art to which the embodiments of the present application pertain.

The logic and/or steps represented in the flowchart or otherwise described, for example, can be considered as an ordered list of executable instructions for implementing logic functions, which can be specifically implemented in any computer-readable storage medium for use by an instruction execution system, apparatus, or device (such as a computer-based system, a system including a processor, or any other system that can take instructions from an instruction execution system, apparatus, or device and execute the instructions), or in combination with such instruction execution systems, apparatus, or devices. For this specification, a "computer-readable storage medium" can be any device that can contain, store, communicate, propagate, or transmit a program for use by or in combination with an instruction execution system, apparatus, or device. More specific examples (non-exhaustive list) of computer-readable storage media include the following: electrical connections having one or N conductors (electronic devices), portable computer disk drives (magnetic devices), random access memories (RAM), read-only memories (ROM), erasable programmable read-only memories (EPROM or flash memory), fiber optic devices, and portable compact disc read-only memories (CDROM). In addition, a computer-readable storage medium can even be paper or other suitable media on which the program can be printed, because the program can be obtained electronically by optically scanning the paper or other media, followed by editing, interpreting, or other suitable processing as necessary, and then storing it in a computer memory.

It should be understood that the various parts of the present application can be implemented in hardware, software, firmware, or a combination thereof. In the above embodiments, N steps or methods can be implemented by software or firmware stored in memory and executed by a suitable instruction execution system. For example, if implemented in hardware, as in another implementation, any of the following well-known technologies in the field can be used alone or in combination: discrete logic circuits with logic gate circuits for implementing logical functions on data signals, application-specific integrated circuits with appropriate combination logic gate circuits, programmable gate arrays (PGA), field-programmable gate arrays (FPGA), etc.

Those skilled in the art can understand that all or part of the steps carried in the above embodiments can be completed by instructing related hardware through a program, and the program can be stored in a computer-readable storage medium. When the program is executed, it includes one or a combination of the steps of the method embodiment.

In addition, the functional units in each embodiment of the present application can be integrated into one processing module, or each unit can exist physically separately, or two or more units can be integrated into one module. The above integrated module can be implemented in the form of hardware or software functional modules. If the integrated module is realized in the form of a software functional module and sold or used as an independent product, it can also be stored in a computer-readable storage medium.

The storage medium mentioned above can be a read-only memory, a disk, an optical disk, etc. Although the embodiments of this application have been shown and described above, it should be understood that the above embodiments are exemplary and should not be construed as limiting this application. Those skilled in the art can make changes, modifications, substitutions, and variations to the above embodiments within the protection scope of the present application.

It should be understood that the application of the present application is not limited to the above examples. For those skilled in the art, improvements or transformations can be made according to the above description, and all these improvements and changes should fall within the protection scope of the claims attached to the present application.

## Claims

1. A charge equalization method for a vehicle battery pack, wherein the charge equalization method for the vehicle battery pack comprises:
if a vehicle is in a powered-on state and the vehicle meets an equalization condition for triggering equalization, collecting battery data of the vehicle battery pack;
calculating to obtain an equalization duration and a charge amount required for the equalization according to the battery data, and selecting an equalization mode according to a use scenario and a use habit;
acquiring a number of low-voltage battery cells; if the number of low-voltage battery cells is less than or equal to a preset number of battery cells, selecting a storage battery with a preset voltage to perform supplemental charging on the low-voltage battery cells until a target charge amount for the equalization is reached; if the number of low-voltage battery cells is greater than the preset number of battery cells, adopting a resistive power-consumption method to reduce a charge amount of a high-charge battery cell to the target charge amount.

2. The charge equalization method for the vehicle battery pack according to claim 1, wherein the equalization condition comprises: a minimum state of charge SOC of a battery cell is greater than a first percentage, a difference between a maximum SOC of a battery cell and the minimum SOC of the battery cell is greater than a second percentage, a maximum voltage difference of battery cells is greater than a preset voltage value, a remaining equalization duration is greater than 0, absence of faults in an entire vehicle, an equalization circuit temperature is less than a first temperature and a battery cell temperature is less than a second temperature, a battery level of the storage battery during supplemental charging equalization is greater than a third percentage SOC; wherein meeting any one of the equalization conditions indicates that the vehicle meets the equalization condition for triggering the equalization.

3. The charge equalization method for the vehicle battery pack according to claim 1 or 2, wherein the battery data comprises a battery voltage, a battery level and a battery current.

4. The charge equalization method for the vehicle battery pack according to any one of claims 1 to 3, wherein the equalization duration comprises a passive resistance equalization duration and a supplemental charging equalization duration with the storage battery;
wherein the passive resistance equalization duration = ΔE/(I 2 *R), wherein ΔE is an equalization charge amount, I is an equalization current, and R is an equalization resistance;
wherein the supplemental charging equalization duration with the storage battery = ΔE/(P*η), wherein ΔE is an equalization charge amount, P is an equalization power of the storage battery, and η is a loss factor.

5. The charge equalization method for the vehicle battery pack according to any one of claims 1 to 4, wherein the calculating to obtain the charge amount required for the equalization according to the battery data specifically comprises:
acquiring a cell voltage difference, and determining whether the cell voltage difference is greater than a voltage difference threshold;
if the cell voltage difference is greater than the voltage difference threshold, determining whether a static duration of an entire vehicle is greater than a preset time, and determining whether an SOC interval is within a preset SOC interval range;
if the static duration of the entire vehicle is greater than the preset time, and the SOC interval is within the preset SOC interval range, selecting an open circuit voltage-state of charge OCV-SOC table lookup method to calculate the charge amount required for the equalization;
if the static duration of the entire vehicle is not greater than the preset time, or, the SOC interval is not within the preset SOC interval range, determining whether the vehicle is in a direct current charging state;
if the vehicle is in the direct current charging state, calculating the charge amount required for the equalization through a constant current charging dQ/dV-SOC curve of the vehicle battery pack;
if the vehicle is not in the direct current charging state, determining whether the vehicle is in an alternating charging state;
if the vehicle is in the alternating charging state, performing screening for battery cells at a charging end, and when it is greater than a fourth percentage SOC, calculating the charge amount required for the equalization.

6. The charge equalization method for the vehicle battery pack according to any one of claims 1 to 5, wherein the selecting the equalization mode according to the use scenario and the use habit specifically comprises:
determining whether an entire vehicle is powered on;
if the entire vehicle is not powered on, adopting parking offline equalization;
if the entire vehicle is powered on, determining whether a vehicle speed is 0;
if the vehicle speed is 0, adopting static equalization;
if the vehicle speed is not 0, adopting driving equalization.

7. The charge equalization method for the vehicle battery pack according to any one of claims 1 to 6, wherein the acquiring the number of low-voltage battery cells; if the number of low-voltage battery cells is less than or equal to the preset number of battery cells, selecting the storage battery with the preset voltage to perform supplemental charging on the low-voltage battery cells until the target charge amount for the equalization is reached; if the number of low-voltage battery cells is greater than the preset number of battery cells, adopting the resistive power-consumption method to reduce the charge amount of the high-charge battery cell to the target charge amount specifically comprises:
acquiring the number of low-voltage battery cells, determining whether the number of low-voltage battery cells is less than or equal to A multiplied by a total number of battery cells, wherein A is a constant less than 0.5;
if the number of low-voltage cells is less than or equal to A multiplied by the total number of battery cells, selecting the storage battery with the preset voltage to perform supplemental charging on the low-voltage battery cells through a high-low voltage direct current to direct current converter until the target charge amount for the equalization is reached;
if the number of low-voltage cells is greater than A multiplied by the total number of battery cells, adopting the resistive power-consumption method to reduce the charge amount of the high-charge battery cell to the target charge amount.

8. The charge equalization method for the vehicle battery pack according to any one of claims 1 to 7, wherein the charge equalization method for the vehicle battery pack further comprises:
when performing supplemental charging on the low-voltage battery cells using the storage battery with the preset voltage, if a battery level of the storage battery is lower than a fifth percentage SOC, excluding the storage battery from the equalization, and performing supplemental charging on the storage battery using the vehicle battery pack; if the equalization condition is met, controlling the storage battery for supplemental charging equalization, if supplemental charging reaches the target charge amount or a condition for the supplemental charging is not met, stopping the supplemental charging.

9. The charge equalization method for the vehicle battery pack according to any one of claims 1 to 8, after the acquiring the number of low-voltage battery cells; if the number of low-voltage battery cells is less than or equal to the preset number of battery cells, selecting the storage battery with the preset voltage to perform supplemental charging on the low-voltage battery cells until the target charge amount for the equalization is reached; if the number of low-voltage battery cells is greater than the preset number of battery cells, adopting the resistive power-consumption method to reduce the charge amount of the high-charge battery cell to the target charge amount, further comprising:
determining whether the equalization duration is greater than 0;
if the equalization duration is greater than 0, storing the equalization duration in real time, and performing subtraction processing on the equalization duration;
determining whether there is a fault or limiting condition that affects the equalization;
if there is no fault or limiting condition that affects the equalization, determining whether a power-down request is detected;
if the power-down request is detected, storing a remaining equalization duration and an equalization parameter, and then powering down.

10. The charge equalization method for the vehicle battery pack according to any one of claims 1 to 9, wherein the charge equalization method for the vehicle battery pack further comprises:
if the vehicle is not in the powered-on state, determining whether a battery management system BMS meets a timed wake-up condition or an offline equalization condition;
if the BMS system meets the timed wake-up condition or the offline equalization condition, reading a historical remaining equalization duration and an equalization mode;
determining whether the historical remaining equalization duration is greater than an offline equalization duration threshold;
if the historical remaining equalization duration is greater than the offline equalization duration threshold, setting an offline equalization duration as the offline equalization duration threshold, and performing offline equalization;
setting a BMS wake-up time as a sum of the offline equalization duration threshold and a preset time.

11. The charge equalization method for the vehicle battery pack according to claim 10, after the determining whether the historical remaining equalization duration is greater than the offline equalization duration threshold, further comprising:
if the historical remaining equalization duration is not greater than the offline equalization duration threshold, directly setting the BMS wake-up time as the sum of the offline equalization duration threshold and the preset time.

12. The charge equalization method for the vehicle battery pack according to any one of claims 1 to 11, wherein the vehicle battery pack comprises a lithium iron phosphate battery pack.

13. A charge equalization system for a vehicle battery pack, wherein the charge equalization system for the vehicle battery pack comprises:
a data collecting module, configured to collect battery data of the vehicle battery pack if a vehicle is in a powered-on state and the vehicle meets an equalization condition for triggering equalization;
an equalization calculating module, configured to calculate to obtain an equalization duration and a charge amount required for the equalization according to the battery data, and select an equalization mode according to a use scenario and a use habit;
an equalization controlling module, configured to acquire a number of low-voltage battery cells; if the number of low-voltage battery cells is less than or equal to a preset number of battery cells, select a storage battery with a preset voltage to perform supplemental charging on the low-voltage battery cells until a target charge amount for the equalization is reached; if the number of low-voltage battery cells is greater than the preset number of battery cells, adopt a resistive power-consumption method to reduce a charge amount of a high-charge battery cell to the target charge amount.

14. A vehicle, wherein the vehicle comprises: a memory, a processor and a program for charge equalization of a vehicle battery pack which is stored in the memory and executable on the processor, when the program for charge equalization of the vehicle battery pack is executed by the processor, steps of the charge equalization method for the vehicle battery pack according to any one of claims 1 to 12 are implemented.

15. A computer-readable storage medium, wherein the computer-readable storage medium stores a program for charge equalization of a vehicle battery pack, when the program for charge equalization of the vehicle battery pack is executed by a processor, steps of the charge equalization method for the vehicle battery pack according to any one of claims 1 to 12 are implemented.

16. A computer program, comprising a program code, when a computer runs the computer program, the program code executes the method according to any one of claims 1 to 12.
